# EUROPEAN PATENT APPLICATION

(11) **EP 0 548 814 A1**
(43) Date of publication of application: **30.06.1993**
(21) Application number: 92121522.4
(22) Date of filing: 17.12.1992
(51) Int. Cl.: B29C 39/02, B29C 41/22, B29C 41/08, A23G 3/20

(54) **Process for continuously manufacturing three-dimensional decorative moldings and apparatus for manufacturing same**

(30) Priority: 21.12.1991 JP 339170/91; 27.12.1991 JP 346252/91; 14.05.1992 JP 121941/92
(71) Applicant: AKUTAGAWA CONFECTIONARY CO., LTD., Tokyo (JP)
(72) Inventor: Akutagawa, Tokuji, Tokyo (JP); Fujishima, Toshiya, Chigasaki-shi, Kanagawa-ken (JP); Otani, Uichi, Tokyo (JP)
(74) Representative: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Abstract**

An improved process and apparatus for continuously manufacturing three-dimensional decorative moldings of various shapes are disclosed wherein a specific two-step molding, i.e. spray molding through a spray nozzle followed by discharge molding through a discharge nozzle is adopted in a conventional apparatus for continuously manufacturing three-dimensional decorative moldings in which an endless belt-line production system is used together with a plurality of elastic flexible molding dies with a three dimensional decorative pattern are arranged in serial. According to the two-step molding technique, molded articles of good quality are obtained in a simple manner, which are free of any pinhole on the surface and also free of any bubbles inside.

## Description

### BACKGROUND OF THE INVENTION:

### 1. Field of the Invention:

The present invention relates to a process for continuously manufacturing three-dimensional decorative moldings and to an apparatus for manufacturing same. More particularly, the present invention relates to a process for continuously manufacturing three-dimensional decorative moldings of various shapes by way of two-step molding, i.e. spray molding followed by discharge molding, and to an apparatus for continuously manufacturing three-dimensional decorative moldings wherein a series of elastic flexible molding dies with a three-dimensional decorative pattern are used along an endless belt-line production system under control of heat and pressure.

### 2. Description of the Prior Art:

From the past, the manufacture of three-dimensional decorative articles in various shapes from a solid thermoplastic moldable material is well known as seen, for example, in case of manufacturing soap, erasing rubber, industrial and household resinous moldings in various forms, chocolate cakes, *kamaboko* (Japanese delicacies made of a fish meat paste) and the like food. In the process of continuously or batchwise manufacturing such moldings, a thermoplastic moldable material once made fluid or viscous is charged into an appropriate molding die while hot according to a mold-charging step (a), the fluidized material in the mold is then cooled as in the case of chocolate or heated as in the case of *kamaboko* according to a mold-solidifying step (b) and finally the solidified moldings are released from the molding die according to a mold-releasing step (c).

Known as the mold-charging step are methods disclosed, for example, in the specifications of Japanese Laid-open Patent Applns. Nos. Sho. 63-312111, 63-312113 and 63-312115. In the firstly mentioned patent application, a moldable material made fluid or viscous is charged into an elastic flexible molding die lest any bubble should be formed, whereby the die is expanded by merely applying reduced pressure externally to die except the opening thereof to charge the die with the moldable material. In the last two patent applications, a fluidized moldable material is blown through a nozzle into an elastic flexible molding die whereby the moldable material is deposited on the inner circumferential surface of the die and solidified as such to obtain a hollow molded product. In the latter mentioned method, therefore, it is not contemplated to eliminate bubbles from the inner surface of the molding die.

In the method of the firstly mentioned patent application, an elastic flexible molding die for manufacturing a molded product with a delicate decorative pattern should naturally have a minute concavo-convex pattern. In case the elastic flexible molding die is prepared by dipping the original hard die, for example, into a latex solution and drying a thin film of the latex around the original die, the resultant elastic flexible die will not be even in thickness especially in the portion of the minute concavo-convex pattern. In addition, such elastic flexible die becomes distortional merely by local concentration of stress in a thin portion thereof caused by pressurized air so that bubbles in the die cannot be eliminated completely. Further, if expansion and contraction of the elastic flexible dies are repeated for several ten times in a continuous or batchwise process for manufacturing a number of molded articles on condition that the dies are somewhat distorted, the dies gradually undergo deformation so that decorative moldings of the same pattern cannot be obtained and the durability or life of the dies becomes rather short. Furthermore, the invention of the firstly mentioned patent application has a drawback such that it necessitates an expensive device for applying reduced pressure to the molding die on performing its method. In contrast, the inventions of the lastly mentioned patent applications comprises spraying a fluidized moldable material directly onto the inner wall of the dies without any pre-treatment therefor, and thus small bubbles are possibly retained in the minute concavo-convex portion of the pattern so that decorative moldings with a good quality can hardly be obtained.

Under the above circumstances, there is a great demand for overcoming such drawbacks, prolonging the durability of the molding dies, and developing a new process for continuously manufacturing decorative moldings entirely free of pinholes caused by small bubbles formed and retained on the inner surface of the molding die.

### BRIEF SUMMARY OF THE INVENTION:

Accordingly, it is an object of the present invention to provide a process for continuously manufacturing three-dimensional decorative moldings wherein all of the drawbacks as seen in the conventional process are completely overcome.

It is another object of the present invention to provide a process for continuously manufacturing three-dimensional decorative moldings of a good quality wherein pinholes on the delicate decorative pattern of the moldings are completely eliminated.

It is still another object of the present invention to provide a process for continuously manufacturing three-dimensional decorative moldings of a good quality wherein a fluidized moldable material is charged into an elastic flexible molding die by way of two-step molding, i.e. spraying molding followed by discharge molding, and solidified *in situ* and then the solidified moldings are released from the die.

It is further object of the present invention to provide an apparatus for continuously manufacturing three-dimensional decorative moldings which is provided with a mold-charging device, a solidifying device, a mold-releasing device and a pre-heating device together with control devices for temperature and pressure along an endless belt-line production system.

It is still further object of the present invention to provide an apparatus for continuously manufacturing three-dimensional decorative moldings which is provided along an endless belt-line production system with a combination of a plurality of elastic flexible molds and specific nozzles for a moldable material along with pressure-controlling devices and temperature-controlling devices.

Other and further objects, features and advantages of the present invention will become apparent more fully from the following description.

### DETAILED DESCRIPTION OF THE INVENTION:

In accordance with one (first) embodiment of the present invention, there is provided a process for continuously manufacturing three-dimensional decorative moldings which comprises a series of the steps as a cycle of (a) charging a fluidized moldable material through a nozzle extending from a depot of the moldable material into a preheated elastic flexible molding die having a molding die portion, (b) solidifying the fluidized moldable material in the molding die portion by adjusting the temperature, (c) releasing the solidified moldings from the molding die by applying superatmospheric pressure to the backside of the molding die and (d) pre-heating the molding die for the next continuous run, wherein the step (a) is carried out by initially spraying a smaller proportion of the fluidized moldable material and/or a material miscible therewith uniformly onto the inner surface of the die portion through a spray nozzle and then filling the die with a substantial proportion of the fluidized moldable material through a discharge nozzle.

In a variant of the above first embodiment of the present invention, the above step (a) is carried out by inflating the elastic flexible molding die outwardly to an expanded size by applying subatmospheric pressure to the backside of the die or alternatively by applying super-atmospheric pressure to the inside of the molding die, spraying a smaller proportion of the fluidized moldable material and/or a material miscible therewith uniformly onto the inner surface of the die portion through the spray nozzle, contracting the molding die to the original size by rendering the pressure backside or inside of the molding die to atmospheric pressure, and then filling the die portion with a substantial proportion of the fluidized moldable material through a discharge nozzle connected to the depot of the moldable material.

In another variant of the above first embodiment of the present invention, the elastic flexible molding die is externally supported on the backside thereof with an outer frame which should be identical in size and structure with the die expanded by inflation precisely in compliance with an enlarged decorative pattern of the die prior to the spraying.

In accordance with another (second) embodiment of the present invention, there is provided with an apparatus for continuously manufacturing three-dimensional decorative moldings which comprises an endless belt-line system provided in serial with plural elastic flexible molding dies each having a die portion, a device for charging a fluidized moldable material from a depot therefor into each molding die previously heated, a solidifying device for the fluidized moldable material by controlling temperature, a mold-releasing device provided with a pressure-controlling device for applying superatmospheric pressure externally to the backside of each molding die, a pre-heating device for the molding die, and a power device for driving the belt-line system, wherein the device for charging the fluidized moldable material is provided with a spray nozzle capable of forming a thin film of a small proportion of the fluidized moldable material and/or a material miscible therewith on the inner surface of the die portion by spray molding and a discharge nozzle arranged downstream of the spray nozzle and extending from the depot capable of filling the die portion with a substantial proportion of the moldable material by discharge molding.

In a variant of the above second embodiment of the present invention, the device for charging the moldable material is further provided with a pressure chamber capable of applying subatmospheric pressure externally to the backside of the molding die or alternatively applying super-atmospheric pressure to the inside of the molding die at the time of the spray molding and capable of rendering the pressure on the backside or inside of the molding die to atmospheric pressure at the time of discharge molding.

In another variant of the above second embodiment of the present invention, the elastic flexible molding die for manufacturing the decorative moldings is externally supported by an outer frame which should be identical in size and structure with the elastic flexible molding die expanded by inflation precisely in compliance with the decorative pattern of the die.

It is one of the characteristic features of this invention that a fluidized moldable material is charged into the pre-heated elastic flexible molding die in consecutive two steps; the molding die is firstly charged with a small proportion of the moldable material and/or a material miscible therewith by way of spray molding whereby a small proportion of the fluidized moldable material and/or the material miscible therewith is deposited as a thin film on the inner circumferential surface of the die, and then is charged with a substantial proportion of the moldable material by way of discharge molding whereby the die portion is filled with the moldable material.

It is another characteristic feature of the present invention that the above two-step molding may be carried out in such manner that the pre-heated molding die is charged with a small proportion of the fluidized moldable material and/or a material miscible therewith by way of spray molding while inflating the molding die outwardly or externally to an expanded size by applying subatmospheric pressure to the backside of the die or alternatively applying superatmospheric pressure to the inside of the die, then contracted to the original size by rendering the pressure on the backside or inside of the molding die to atmospheric pressure and finally filled with a substantial proportion of the moldable material by way of discharge molding.

It is still another characteristic feature of the present invention that in connection with the characteristic feature just above described, the elastic flexible molding die is externally supported by an outer frame which should be identical in size and structure with the molding die expanded by inflation precisely in compliance with the enlarged decorative pattern of the die.

The elastic flexible molding die used in the present invention is in the form of an open bag into which a moldable fluid or viscous material can be introduced. Any of the known conventional elastic flexible molding die can be used in the present invention and the size and thickness of the molding die can properly be determined in accordance with the known conventional die in the form of a bag. The molding die is generally made of an elastic flexible natural or synthetic resin include latex rubber, butyl rubber, SBR, silicone rubber, etc. and polyester, polyurethane, polyamide, polyether, polyolefin and the like resins. The molding die in the form of an open bag can be divided into two portions in structure; one is molding die portion corresponding to the main body of the bag where a moldable material is introduced and its molding is achieved, and the other is a die holding portion corresponding to an annular or square-shaped opening portion of the bag. As a matter of course, the inner surface of the die portion has a female figure corresponding to a three-dimensional decorative pattern. The die holding portion surrounds the opening of the die portion, from which the moldings are taken out, and generally functions as a joint portion for connecting the molding die to a continuous molding apparatus. The shape of the die holding portion is generally is a flat plate or frame so as to facilitate mounting of the portion to a molding apparatus, but is not limited to such structure; the die holding portion may be in the form of a funnel, cylinder or any combined complicate form so far as it firmly fix the die portion to the supporting structure. The molding die portion is preferably even in thickness but may have a slight concavo-convex structure. A substance constituting the elastic flexible molding die should have a melting or softening point sufficiently higher than that of the moldable material.

The moldable material is normally solid and thermoplastic but is heated at the time of molding to become fluid or viscous so as to be suitable for introducing into the die portion. The term "fluidized" is used hereinbefore to mean the state of freely "liquefied" or "viscous" to make the material capable of being charged into a molding die. Illustrative of such moldable material are, for example, foods or confectionery materials such as chocolate, jelly, sugar candy, cheese, butter, boiled fish-paste and the like as well as industrial materials such as erasing rubber, soap, wax, gypsum, concrete and a thermoplastic resin for various industrial and daily necessaries. A liquid material of two- or multi-component system which can be reacted chemically, for example, by heating to form a solid may be used as the moldable material. A liquid material which can be solidified by cooling may also be used as the moldable material of this invention on condition that the temperature is adjusted properly for solidification.

In case the moldable material is edible, care should be taken to choose the material for the elastic flexible molding die so that they are non-toxic and not harmful for human and animals in view of Food Sanitation Law.

In the two-step molding as contemplated in the present invention, the moldable material to be charged firstly in a small proportion to the molding die may be a material miscible with the moldable material. In case the moldable material is chocolate, for example, a material to be charged into the molding die by spray molding may be cacao fat, an edible oil or chocolate itself incorporated with a fluidized filler. It is also possible that a moldable material to be charged firstly by way of spray molding may be different from a moldable material to be charged later by way of discharge molding so far as both moldable materials are miscible with each other. For example, the moldable material charged into the molding die by way of spray molding may be cream and the moldable material charged into the molding die by way of discharge molding may be chocolate.

By the term "spray molding" is meant herein molding of a fluidized material by spraying it into a molding die by its own pressure or by the aid of a jet of a pressurized gas stream. By the term "discharge molding" is meant herein molding of a fluidized material in the die supplied directly from a depot thereof, for example, by gravity flow discharged therefrom. A known conventional equipment can be used for the cooling tunnel used in the solidifying step, the pre-heater used in the pre-heating step, a power unit for continuously driving the endless belt-line system, and a pressure-regulating device for evacuating or pressurizing the chamber of the present invention.

The outer frame used in the pressure chamber for supporting the elastic flexible molding die should be identical in size with the elastic flexible molding die expanded by inflation and should be in compliance with the expanded decorative pattern of the die. It may preferably be made of a hard porous material through which air may be evacuated so that the molding die may be pressed precisely against the pattern on the outer frame without causing any distortion of the frame when the chamber is evacuated. Any of the materials such as shaped metals, resins, ceramics and wood can be used for the material for constituting the outer frame. Illustrative of the material for constituting the outer frame are, for example, resinous materials such as foamed polystyrene, foamed polyurethane and the like resinous foams having an intercellular structure, a sintered material of ceramics, sintered plastics, wire nets and the like shaped articles.

The present invention can more fully be understood from the following description taken in conjunction with the accompanying drawings in which:
Fig. 1 is an explanatory drawing showing a typical example of the known conventional apparatus for continuously manufacturing three-dimensional decorative moldings.
Fig. 2a is an explanatory drawing showing one example of the device of this invention for charging a fluidized moldable material into a molding die by way of spray molding without using a pressure chamber.
Fig. 2b is an explanatory drawing showing another example of the device of this invention for charging the fluidized moldable material into a molding die by way of spray molding in a pressure chamber in open state.
Fig. 2c is an explanatory drawing showing still another example of the device of this invention of the same type as shown in Fig. 2b except that the pressure chamber has a hard outer frame.
Fig. 3a is an explanatory drawing showing the state of spraying the moldable material into the molding die shown in Fig. 2a.
Fig. 3b is an explanatory drawing showing the state of spraying the moldable material into the inflated molding die in the pressure chamber as shown in Fig. 2b.
Fig. 3c is an explanatory drawing showing the state of spraying the moldable material into the inflated molding die in the pressure chamber having the hard outer frame shown in Fig. 2c.
Fig. 4a is an explanatory drawing showing the state of a thin film of the moldable material formed on the inner surface of the molding die.
Fig. 4b is an explanatory drawing showing the state of a thin film of the moldable material formed on the inner surface of the molding die contracted to the original size in the pressure chamber in opened state.
Fig. 4c is an explanatory drawing showing the state of a thin film of the moldable material formed on the inner surface of the molding die contracted to the original size in the pressure chamber in opened state having the hard outer frame.
Fig. 5 is an explanatory drawing showing the molding die coated with a thin film of the moldable material located below a discharge nozzle extending downwardly from a metering device for the moldable material.
Fig. 6 is an explanatory drawing showing the state of charging the moldable material into the molding die through the discharge nozzle introduced into the molding die.
Fig. 7 is an explanatory drawing showing the final stage of the charging step wherein the molding die portion has wholly been filled with the moldable material and the discharge nozzle has been elevated upwards.

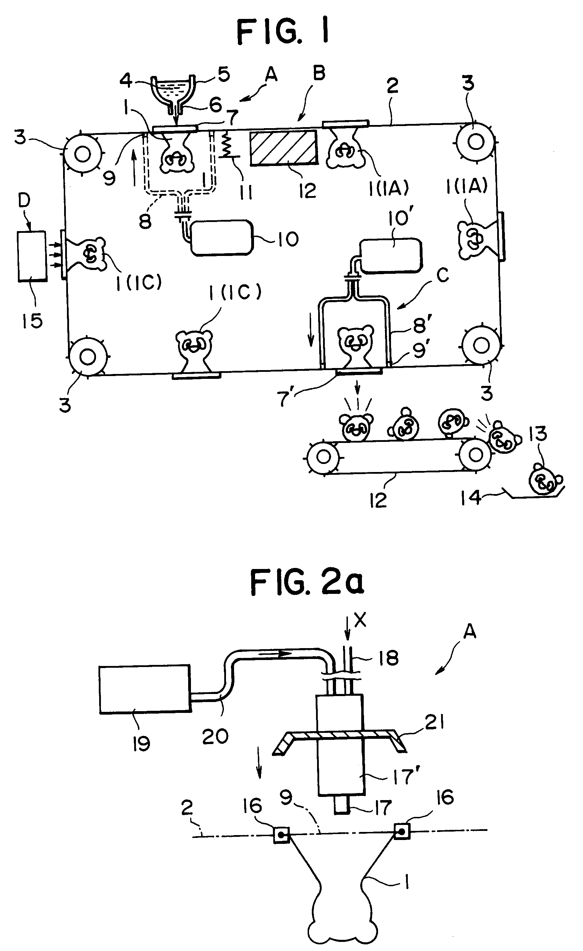

Basically, the present invention utilizes the conventional apparatus for continuously manufacturing three-dimensional moldings which generally comprises an endless belt-line system equipped with a power unit capable of driving the endless belt-line, a plurality of elastic flexible molding dies as described above which are mounted in serial along the endless belt-line, a plurality of pulleys supporting the belt-line and assisting the rotation thereof, a charging section where the die is charged with a fluidized moldable material supplied from a depot thereof optionally by the aid of a pressure-regulating device, a solidifying section where the temperature of the die is adjusted, e.g. by cooling to solidify the moldable material, a mold-releasing section where the resultant molded article is released from the mold by its own gravity especially by utilizing a pressure-regulating device, and a pre-heating section where the empty die is heated to a predetermined temperature with a heater. Fig. 1 shows a typical example of such known conventional apparatus.

Referring to Figs. 1-7, the apparatus and the process of this invention for manufacturing three-dimensional decorative moldings are explained, for convenience' sake, with respect to the use of chocolate as a moldable material but it is to be noted however that the moldable materials utilizable in this apparatus are not limited to chocolate only.

In Fig. 1 schematically showing a whole system of a typical known apparatus, a plurality of the same elastic flexible molding dies **1** each of which is a female figure, corresponding, for example, to a head of a rare favorite animal "giant panda" is detachably mounted to an endless conveyer belt **2** wound around several pulleys **3**. The molding dies **1** may be different with one another, for example, the dies **1, 1A, 1B,** etc., if it is desired to obtain various kinds of moldings in a single continuous run. The endless conveyer belt **2** is driven by a motor (not shown) and its movement is intermittently continuous in such manner that the movement is stopped at locations where the individual molding dies are charged with a moldable material (chocolate, in this case) or the resulting individual moldings are released from the dies. Thus, it is convenient that a span of the belt between the locations where the charging of the moldable material and the release of the moldings are effected is previously determined to accord with the distance between the dies. When the die **1** stops at the charging section **A**, a given amount of chocolate **4** highly fluidized (or molten by tempering) and pooled in a depot **5** therefor is poured into the die **1** through a metering device (not shown), a nozzle or a discharge hole **6** of the depot **5**, and an opening **7** of the die **1** under atmospheric pressure. Alternatively, an open pressure chamber **8** may previously be prepared separately as shown by a double dotted line, allowed to ascend up to the level of the conveyer belt **2** by a proper elevation device (not shown) capable of moving the pressure chamber **8** up-and-down, fixed thereto by any suitable shielding or sealing member **9** to form a confined pressure chamber, and evacuated by a pressure-regulating device **10** (for example, a vacuum pump in this case) whereby the backside of the die **1** is evenly pulled outwards under subatmospheric pressure to inflate the elastic flexible die **1**. In the latter alternative case, a given amount of fluidized chocolate **4** passed through a metering device is introduced into a molding die portion **1'** of the inflated (or expanded) die **1** at this stage through the opening 7 under subatmospheric pressure. The pressure in the confined pressure chamber **8** is then rendered to atmospheric pressure by actuating the pressure-regulating device **10** whereby the inflated die **1** is contracted to the original size, and the pressure chamber **8** is opened by moving it so as to descend. The exposed die **1** is then passed through a vibrator **11** where the die **1** is vibrated with a view to eliminating any bubbles formed in the charging section **A**. The die **1** is then passed through a cooling tunnel **12** for a given period of time in a cooling section **B** to solidify the fluidized chocolate. The die **1** is then moved to a mold-releasing section **C** where a pressure chamber **8**' similar to the chamber **8** connected to a pressure-regulating device **10'** similar to the device **10** is allowed to descend down to the conveyer belt **2** and fixed to a shielding or sealing member **9'**, and the confined chamber **8** thus formed is then pressurized by sending pressurized air thereto from the device **10'**. The pressurized air is thus applied externally to the backside of the die **1** whereby the resultant moldings are pushed out from the die **1** and dropped down by its own gravity through the opening **7'** of the die **1** on the moving surface of a product-recovering conveyer belt **12** driven by a motor (not shown). The molded article **13** as the end product is collected in a container **14.** The empty die **1** is then passed through a pre-heating section **D** where the die **1** is heated by a preheater **15** up to a temperature sufficient enough to prevent solidification of the moldable material **4**, i.e. molten chocolate, e.g. by heating the die up to a temperature approximately identical with the fluidized chocolate **4** in the depot **5**. In case of chocolate, a glossy decorative product of a good quality can be obtained by making the temperature of the molding die almost equal to that of chocolate discharged from the depot **5.** According to the above conventional process using the apparatus as shown in Fig. 1, however, small bubbles existing in the moldings or small pinholes formed thereon could hardly be eliminated to deteriorate the quality of the end product.

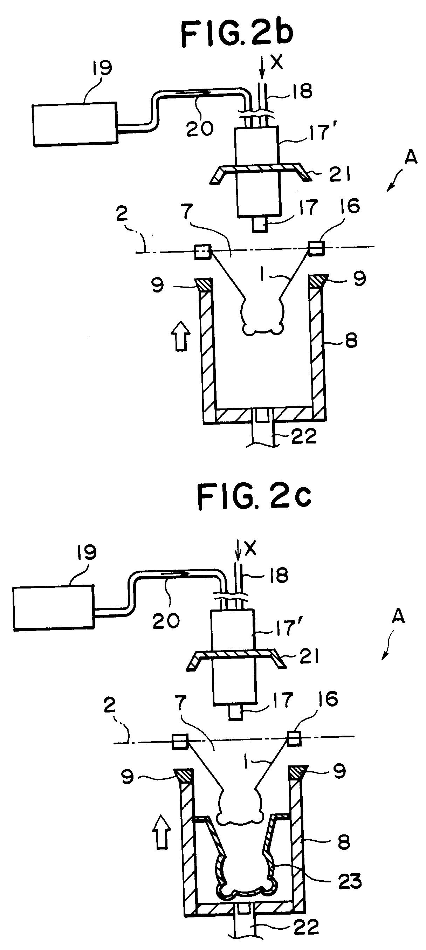

In the present invention, the above drawbacks in the prior art can be overcome by making an improvement in the process and apparatus in connection with the charging section **A.** The improved aspects of the present invention will be explained hereinafter with reference to Figs. 2-7 wherein the same reference numerals as given in Fig. 1 have the same meanings as given in Fig. 1.

In Fig. 2a showing the case of charging the molding die with a moldable material (chocolate in this case) under atmospheric pressure, the conveyer belt **2** is bores to form holes into which the die **1** which is a female figure corresponding to a head of "giant panda" as in Fig. 1 is inserted detachably. The die **1** is fixed to the belt **2** by a fixed frame **16**. In the section **A**, a spray nozzle **17** for molten, i.e. fluidized chocolate is located just above the die **1**, which is capable of spraying the fluidized chocolate and/or a liquid material miscible therewith into the die **1** through the opening **9** thereof and moving in up-and-down direction vertically by the aid of a proper device (not shown). The spray nozzle **17** has a main body **17'** on the basal portion thereof and has a such structure that a moldable material and/or a material miscible with the moldable material (molten chocolate in this case) can be introduced into a main body **17**', for example, in the form of a cylinder through a supply pipe **18** and a suitable metering device (not shown) from the depot **5** or a proper mixing tank (not shown) along the direction of an arrow mark **X**, while an air or any kind of non-harmful gas preferably maintained at the same temperature as the molten chocolate from a pressurized air tank equipped with a heater or an air pump **19** can be sent to the same main body **17'** through an insulating air-duct **20.** Thus, a combined stream of molten chocolate and a warmed air or gas can be sprayed from the nozzle **17** and this is much more better than the case wherein a nozzle for molten chocolate and a nozzle for air are separately arranged, in obtaining a uniform spray of molten chocolate. The material miscible with the moldable material is preferably higher in fluidity than the moldable material. The main body **17'** is generally provided with a cover 21 for preventing scattering of the moldable material **4**. In case the moldable material is liquefied chocolate, for example, the material miscible therewith is preferably a vegetable oil which has a higher fluidity at a given temperature.

In Fig. 2b showing the case of charging the molding die with a moldable material under subatmospheric pressure in a confined chamber wherein the same reference numerals as given in Figs. 1 and 2a have the same meanings as given above, an open cylindrical pressure chamber **8** provided on the upper annular open end with a shielding or sealing member **9** and with a pipe **22** connected to a pressure-regulating device **10** for evacuating the chamber **8,** is located below the die **1** so as to be moved upwards by a proper elevation device (not shown) capable of moving in up-and-down direction to form a confined pressure chamber when a cover **21** is moved down and fixed to the frame **16**.

In Fig. 2c showing the die of the same type as shown in Fig. 2b except that the pressure chamber is provided on the inner wall thereof with a hard outer frame **23** which is made of a plate of a metal or a synthetic resin and is in precise compliance with the the shape of the elastic flexible molding die **1** when it is inflated in the subsequent stage.

In these Figs. 2a, 2b and 2c, the nozzle 17 may not be a single one but an aggregate of plural small nozzles to enhance the spraying effect of the moldable material.

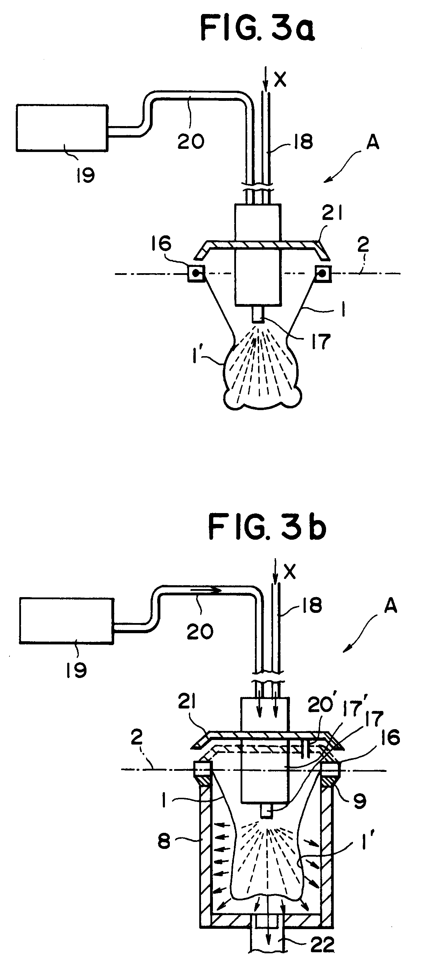

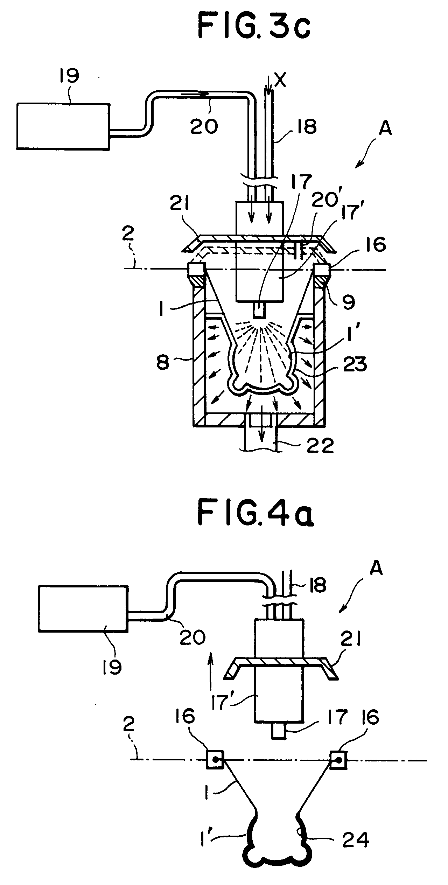

In addition, the pressurized air tank or air pump **19** and the air-duct **20** may not be used in these embodiments if molten chocolate itself reserved in the depot **5** can be pressurized and sprayed into the die **1** by its own pressure. The process of the present invention for continuously manufacturing three-dimensional decorative moldings is now explained stepwise with reference to Fig. 3-7 wherein the same reference numerals as used in the foregoing Figs 1-2 have the same meanings as given above.

Fig. 3a shows the state of spraying molten chocolate into the molding die **1** under atmospheric pressure in the embodiment shown in Fig. 2a. In Fig. 3a, the molding die **1** moving along the conveyer belt **2** is programmed to stop at a position where the nozzle is located just above. The nozzle **17** is then moved down whereby the die **1** is covered with the cover **21** to prevent any scattering of molten chocolate. The molten chocolate from the depot (not shown) is sprayed by its own pressure from the nozzle **17** through the supply pipe **18** or as a mixture together with a pressurized air flow through the tank **19** and the air-duct **20** uniformly onto the inner surface of the die portion **1**'. In this case, it is desirable to effect the spray treatment stepwise in such manner that the molten chocolate is not sprayed initially but a small amount of a highly fluidized vegetable or animal oil and fat alone or a mixture with a molten chocolate is sprayed initially to form a bubble-free thin spread area of such oily material in compliance exactly with the decorative pattern of the die, and then a substantial amount of molten chocolate which is somewhat inferior in fluidity to the oily material is sprayed onto the thin area of the oily material whereby the initially formed thin oily area highly miscible with molten chocolate is homogeneously mixed with the substantial amount of chocolate, thus preventing the formation of bubbles on the surface of the resultant moldings.

In Fig. 3b showing the state of spraying molten chocolate into the molding die **1** under subatmospheric pressure in the embodiment of Fig. 2b, the molding die **1** stopped at a position where the nozzle **17** is located just above is confined in a pressure chamber **8** by elevating it until the sealing member **9** is attached to the frame **18** and the space between the chamber **8** and the die **1** is evacuated through a pipe **22** whereby the space is maintained under reduced pressure and the die **1** is outwardly pulled to inflate the die portion **1**'. The spray **17** is then allowed to descend into the die **1** and a small portion of molten chocolate is then sprayed through the supply pipe **18** by its own pressure or by the aid of a stream of pressurized air through the pipe **20** uniformly into the die portion **1**' whereby the cover **21** is approached closely to the frame **16** to prevent any scattering of the molten chocolate. In this case, a small amount of a vegetable or animal oil and fat alone having high fluidity or a mixture of molten chocolate and such oil and fat may be sprayed in place of the molten chocolate, as shown in Fig. 3a, into the die portion **1**'. In this Fig. 3b, the spraying treatment may also be carried out by pressurizing the chamber **8** internally. In this alternative case, a cover **21** provided with an air duct **20'** is moved downwards as shown in the double dotted line to form a confined chamber, and a pressurized air or gas is introduced into the chamber **20'** whereby the die **1** is inflated similarly as in the case of evacuating the space on the backside of the die **1**. The inner pressure of the die **1** in this case should be controlled so as to be lower than the spraying pressure.

In Fig. 3c showing the state of spraying molten chocolate into the molding die **1** having an outer frame **23** under subatmospheric pressure, the spraying treatment itself of molten chocolate is carried out essentially in the same manner as shown in Fig. 3b except that the outer frame **23** is used in this example. In this case, the outer frame **23** is in compliance in shape with the outside of the die **1** when it is inflated so that the thin flexible die **1** is exactly overlapped in size on the outer frame when the chamber **8** is confined and the inner space is evacuated through the pipe **22** to maintain the inner space under subatmospheric pressure. Alternatively, the die **1** may also be inflated by pressuring the die internally, as described in Fig. 3b, in such manner that a cover **21** provided with a air duct **20'** is moved downwards as shown by the double dotted line so as to form a confined chamber and a pressurized air or gas is introduced through the air duct **20'** to inflate the die **1** internally. In this case, the inner pressure in the chamber should be lower than the spraying pressure of molten chocolate. In this manner, complicate concavo-convex pattern on the flexible die **1** is closely supported by the hard outer frame **23** of the chamber **8** without forming any interstice between the outer surface of the die and the inner surface of the outer frame, thus maintaining the shape of the flexible inflated molding die **1** in the form of a bag steadfast.
When the nozzle **17** is inserted into the chamber **8** and a definite amount of molten chocolate and/or a material miscible therewith is sprayed, a thin film of the molten chocolate and/or the material miscible therewith can uniformly be deposited on the inner surface of the die **1** as a film. The spraying operation in this case can be carried out in the same manner as described in case of Fig. 3a.

Once a thin film of molten chocolate and/or a material miscible therewith has been formed on the inner surface of the molding die **1**, the spraying operation is finished at this stage and charging of a substantial amount of molten chocolate as the next stage can then be carried out under atmospheric pressure in any of the above three embodiments. In each embodiment the nozzle is allowed to ascend, and the pressure of evacuated inner space in the chamber **8**, if any (in case of Fig. 3a or 3b), is brought to atmospheric pressure by introducing air into the inner space whereby the inflated molding die **1** is contracted to the original size.

In Fig. 4a wherein the reference numerals once shown have the same meanings as given above, the spraying operation under atmospheric pressure is stopped and the spray nozzle **17** is elevated. A thin film **24** of molten chocolate and/or a material miscible therewith is deposited on the inner surface of the molding die **1** exactly in compliance with the complicate figure on the die surface. In this case, the molding die is not inflated.

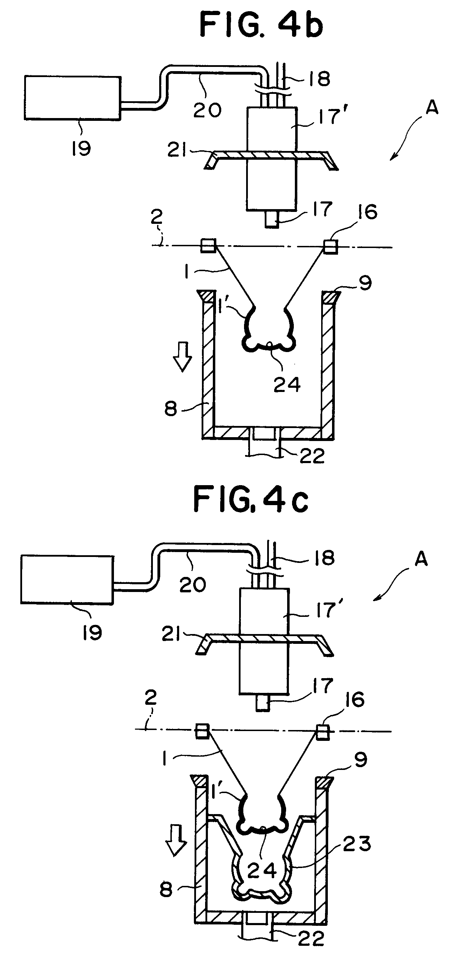

In Figs. 4b and 4c wherein the reference numerals once shown have the same meanings as given above, the elevation of nozzle **17** and introduction of air into the inner space of the chamber **8** through the pipe **22** may be carried out in any order of succession, and finally the chamber **8** is moved downwards as shown by the arrow mark whereby the inflated molding die **1** is contracted to the original size and the a thin film **24** of molten chocolate and/or a material miscible therewith is formed on the inner surface of the contracted die **1** precisely in compliance with the complicate figure thereon without forming any bubbles.

The molding die **1** carrying the thin film **24** is then moved by the action of the conveyer belt **2** along the belt-line and stopped at a section **A'** adjacent to and downsteam of the section **A,** where a discharge nozzle **25** is positioned for introducing the remaining substantial amount of molten chocolate into the die **1**.

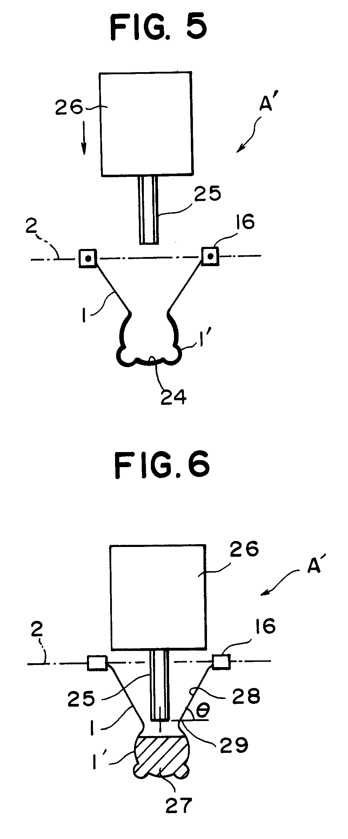

In Fig. 5 showing such state immediately before discharging of the remaining substantial amount of molten chocolate, wherein the reference numerals once shown have the same meanings as given above, the molding die **1** carrying the thin film **24** on the inner surface of the die portion **1'** thereof is located just below a reservoir **26** of chocolate previously fluidized by tempering which is equipped with an appropriate metering device (not shown) and the discharge nozzle **25** extending downwards therefrom as shown by the arrow mark. The discharge nozzle **25** is arranged downstream of the spray nozzle **17** along the belt-line. The reservoir **26** is allowed to descend as shown by the arrow mark in the drawing by the aid of a proper mechanism (not shown) capable of moving it in up-and-down directions at the time of introducing a definite amount of molten chocolate.

In Fig. 6 showing the state of charging molten chocolate from the reservoir **26** into the molding die **1** through the discharge nozzle **25**, wherein the reference numerals once shown have the same meanings as given above, the reservoir 26 is allowed to descend in such manner that its front end may be just above the moldable portion **1**, and a definite substantial amount of molten chocolate is weighed and introduced into the die portion **1'** through the nozzle **25**. In this case, a thin film **24** of molten chocolate and/or a material miscible therewith is homogeneously mixed with the newly introduced substantial amount of molten chocolate without permitting the formation or any bubbles to form a molten mass **27** of chocolate.

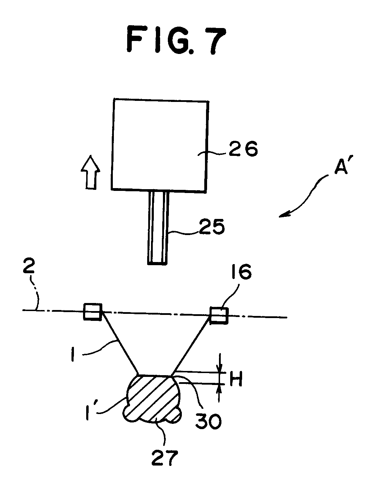

In Fig. 7 showing the final stage of the charging step, wherein the reference numerals once shown have the same meanings as given above, the die portion **1'** has wholly been filled with the molten mass **27** of chocolate comprising a predetermined substantial amount of molten chocolate newly introduced and homogeneously mixed with the thin film of molten chocolate and/or a material miscible therewith while the reservoir **26** equipped with a metering device and the discharge nozzle **25** has been elevated as shown by the arrow mark.

In this case, an angle ϑ in Fig. 6 formed by an edge line **28** of the basal portion of the die **1** in an inverted conical shape and a horizontal line across a squeezed annularly narrowest portion **29** of the die portion **1'** is preferably adjusted within a range of 5-35°. Further, an adjustable portion **30** defined by a given height **H** can be provided in the boundary portion between the basal portion of the die **1** in an inverted conical shape and the die portion **1'**, i.e. the squeezed narrowest portion **29** as shown in Fig. 7. This adjustable portion permits any error in the metered amount of the molten chocolate from the reservoir **26** and also any capacity error in the molding die **1** caused by its strain resulting from repeated use.

In general, the elastic flexible molding die **1** is manufactured by immersing an original thin flexible die, for example, into a latex solution and drying the latex-coated original die. The reason why the angle ϑ is to be limited to more than 5° is that if the angle is less than 5°, the die will become thicker in locally circumferential parts in the basal portion so that several thicker annular parts are formed on the latex-coated basal portion are formed to make it difficult to release the resultant molded article from the die. On the other hand, if the angle ϑ exceeds 35°, the adjustable portion **30** will hardly be stretched in lateral direction at the time of releasing the resultant molded article from the molding die **1**.

The molding die **1** thus filled with a predetermined molten chocolate in the charging section **A** and **A'** is then successively conveyed to a cooling section **B** where the molding die is cooled, a mold-releasing section **C** where the molded solid article aimed at is released from the die and a pre-heating section **D** where the empty molding die is preheated for the next continuous run in the written order of succession along the endless belt-line system in accordance with the conventional process.

In case the above continuous molding treatment is carried out repeatedly for manufacturing a great number of the molded products, multiple belt-line systems may be installed parallelly to manufacture multiple molded products at a time and can be operated continuously.

In the above examples, molten or fluidized chocolate is used as a moldable material. It is to be noted, however, that the above molding treatment by either heating or cooling can be applied to the manufacture of molded articles in various fields, for example, other edible materials such as *kamaboko*, cheese, jelly, etc., daily necessaries such as soap, erasing rubber, ice, etc., and industrial materials such as various kinds of thermoplastic resinous articles.

It is a merit of this invention that the formation of pinholes on the surface of the molded articles manufactured by using a elastic flexible die for molding can perfectly be prevented by carrying out the operation stepwise in such manner that the molding die, either in the form as it is or in inflated form, is charged firstly with a small amount of a fluidized moldable material and/or a material miscible therewith to form a thin film of the material on the inner surface of the die and then with a substantial amount of the moldable material while contracting the molding die to the original size.

It is another merit of this invention that the formation of bubbles in the molded articles can also be prevented by the molding operation of this invention by optionally inflating the molding die at the time of firstly charging it with a small amount of fluidized moldable material and/or a material miscible therewith followed by charging the die in the original size with a substantial amount of the moldable material. The use of a combination of inflating the molding die by applying reduced pressure to the backside of the die and employing either or both of a material miscible with the moldable material and a small amount of the moldable material at the time of first charging operation is most desirable for the present invention.

It is still another merit of this invention that the use of a material miscible with the moldable material, for example, the use of a vegetable oil for fluidized chocolate, capable of forming a very thin membrane of the former material on the surface of the die and thus can omit the use of any mold-releasing agent when the resultant molded article is released from the die.

It is further merit of this invention that due to the firstly and secondly mentioned merits, the molded articles of good quality can be obtained as a whole without necessitating any further treatment.

It is therefore a great advantage of this invention that molded articles of good quality can be obtained in the conventional continuous molding operation by incorporating it with a specific device, e.g. a combination for the above mentioned treatments for carrying out the first mold-charging step.

As has been described hitherto, the technical effect achieved by using the specific device of this invention are excellent and applicable to the manufacture of moldings in various fields. It is also understood that the preceding representative embodiments may be varied within the scope of the present specification both as to the materials and treatment conditions, by those skilled in the art to achieve essentially the same results.

As many widely different embodiments of the invention may be made without departing from the spirit and scope thereof, it is to be construed that this invention is not limited to the specific embodiments thereof except as defined in the appended claims.

## Claims

1. In a process for continuously manufacturing three-dimensional decorative moldings which comprises a series of steps as a cycle of (a) charging a fluidized moldable material through a nozzle extending from a depot of the moldable material into a pre-heated elastic flexible molding die having a molding die portion, (b) solidifying the fluidized moldable material in the molding die portion by adjusting the temperature, (c) releasing the solidified moldings from the molding die by applying superatmospheric pressure to the backside of the molding die and (d) pre-heating the molding die for the next continuous run, an improvement wherein the step (a) is carried out by initially spraying a smaller proportion of the fluidized moldable material and/or a material miscible therewith uniformly onto the inner surface of the die portion through a spray nozzle and then filling the die portion with a substantial proportion of the fluidized moldable material through a discharge nozzle connected to the depot.

2. An improvement according to claim 1, wherein the step (a) is carried out by inflating the elastic flexible molding die outwardly to an expanded size by applying subatmospheric pressure to the backside of the die or alternatively by applying superatmospheric pressure to the inside of the molding die, spraying a smaller proportion of the fluidized moldable material and/or a material miscible therewith uniformly onto the inner surface of the die portion through the spray nozzle, contracting the molding die to the original size by rendering the pressure backside or inside of the molding die to atmospheric pressure, and then filling the die portion with a substantial proportion of the fluidized moldable material through the discharge nozzle connected to the depot.

3. An improvement according to claim 2, wherein the molding die is externally supported on the backside thereof with an outer frame which should be identical in size and structure with the die portion as expanded by inflation precisely in compliance with an enlarged decorative pattern of the die prior to the spraying.

4. An improvement according to claim 1, wherein a small definite proportion of the the fluidized moldable material and/or a material miscible therewith is initially sprayed through a spray nozzle onto the inner surface of the die portion to form a thin film of the sprayed material on the inner surface and then a substantial definite proportion of the fluidized moldable material is introduced into the die portion through a discharge nozzle.

5. An improvement according to claim 1, wherein the spray nozzle has a main body provided with an air-duct connected to an air pump and with a supply pipe equipped with a metering device and a definite amount of the fluidized moldable material and/or a material miscible therewith is sprayed together with pressurized air.

6. An improvement according to claim 1, wherein an angle ϑ formed by an edge line of the basal portion of the die and a horizontal line across a squeezed annularly narrowest portion of the die portion is adjusted within a range of 5-35°

7. An apparatus for continuously manufacturing three-dimensional decorative moldings which comprises an endless belt-line system provided in serial with plural elastic flexible molding dies each having a die portion, a device for charging a fluidized moldable material from a depot therefor into each molding die previously heated, a solidifying device for the fluidized moldable material by controlling temperature, a mold-releasing device provided with a pressure-controlling device for applying superatmospheric pressure externally to the backside of each molding die, a pre-heating device for the molding die, and a power device for driving the belt-line system, wherein the device for charging the fluidized moldable material is provided with a spray nozzle capable of forming a thin film of a small proportion of the fluidized moldable material and/or a material miscible therewith on the inner surface of the die portion by spray molding and a discharge nozzle arranged downstream of the spray nozzle and extending from the depot capable of filling the die portion with a substantial proportion of the fluidized moldable material by discharge molding.

8. An apparatus according to claim 7, wherein the device for charging the moldable material is further provided with a pressure chamber capable of applying subatmospheric pressure externally to the backside of the molding die or alternatively applying superatmospheric pressure to the inside of the molding die at the the time of spray molding and capable of rendering the pressure on the backside or inside of the molding die to atmospheric pressure at the time of discharge molding.

9. An apparatus according to claim 8, wherein the pressure chamber is provided on the inside thereof with an outer frame which should be identical in size and structure with the die portion as expanded by inflation precisely in compliance with an enlarged decorative pattern of the die.

10. An apparatus according to claim 1, wherein the spray nozzle has a main body provided with an air-duct connected to an air pump and with a supply pipe equipped with a meterin device while the discharge nozzle is extended from the depot through a reservoir equipped with a metering device.
